# EUROPEAN PATENT SPECIFICATION

(11) **EP 4 400 403 B1**
(45) Date of publication and mention of the grant of the patent: **18.11.2026**
(21) Application number: 22883554.2
(22) Date of filing: 18.10.2022
(51) Int. Cl.: B63B 11/00, B63H 21/17

(54) **SHIP**
SCHIFF
NAVIRE

(30) Priority: 18.10.2021 JP 2021170171
(43) Date of publication of application: 17.07.2024
(73) Proprietor: Mitsubishi Shipbuilding Co., Ltd., Yokohama-shi Kanagawa 220-8401 (JP)
(72) Inventor: KATSUBE Makoto, Yokohama-shi, Kanagawa 220-8401 (JP); ONZUKA Masanori, Yokohama-shi, Kanagawa 220-8401 (JP)
(74) Representative: Studio Torta S.p.A.
(86) International application number: PCT/JP2022/038714
(87) International publication number: WO 2023/068250

(56) References cited:
- WO-A1-2018/084716
- JP-A- 2019 031 161
- JP-A- 2019 031 161
- JP-B2- 5 863 904
- KR-B1- 101 911 056
- ANONYMOUS: "WORLD'S LARGEST PLUG-IN COLOR HYBRID FERRY", INTERNET CITATION, 1 October 2019 (2019-10-01), pages 1 - 26, XP009545801, Retrieved from the Internet <URL:https://www.shippax.com/backnet/media_archive/original/3b29fc8f5088bd2fa84c6e3387451516.pdf> [retrieved on 20241217]
- KITAMURA KITAMURA TOHRU TOHRU, TERADO KEIZO, MORI TETSUYA, SAKAMOTO TOSHINOBU, KURIBAYASHI SHIYUUHEI: "High efficiency roll-on roll-off cargo ship adapted to MODAL SHIFT policy", MITSUBISHI HEAVY INDUSTRIES TECHNICAL REPORT, vol. 41, no. 6, 1 November 2004 (2004-11-01), pages 330 - 333, XP093058136, ISSN: 0387-2432
- ANONYMOUS: "WORLD’S LARGEST PLUG-IN COLOR HYBRID FERRY", SHIPPAX INFO, SHIPPAX AB, SWEDEN, Sweden, pages 1 - 26, XP009545801, Retrieved from the Internet <URL:https://www.shippax.com/backnet/media_archive/original/3b29fc8f5088bd2fa84c6e3387451516.pdf>

## Description

### Technical Field

The present disclosure relates to a ship.

### Background Art

PTL 1 discloses a ship that is equipped with an electric propulsion system in order to reduce greenhouse gases generated during navigation of the ship. The ship of PTL 1 is a small passenger ship, is not equipped with a generator, and is configured to navigate with only electric power of a lithium ion storage battery charged while being at anchor in the ordinary way.

### Citation List

### Patent Literature

[PTL 1] Japanese Unexamined Patent Application Publication No. 2015-143099
[PTL 2] ANONYMOUS: "WORLD'S LARGEST PLUG-IN COLOR HYBRID FERRY", INTERNET CITATION, 1 October 2019 (2019-10-01), pages 1-26, XP009545801,
   Retrieved from the Internet:
   URL:https://www.shippax.com/backnet/media_archive/original/3b29f c8f5088bd2fa84c6e3387451516.pdf
[PTL 3] JP 2019 031161 A (MUKAISHIMA DOCK Kk) 28 February 2019 (2019-02-28)
[PTL 4] JP 5 863904 B2 (MITSUBISHI HEAVY IND LTD) 17 February 2016 (2016-02-17)

### Summary of Invention

### Technical Problem

Meanwhile, even for a ship that is large and navigates at high speeds, such as a car ferry or a roll on/roll off passenger (ROPAX) ship, it is desired to navigate with electric propulsion for reducing greenhouse gases, similarly to the small passenger ship of PTL 1.

However, as a size of the ship increases and a navigation speed of the ship is higher, more energy is required, and a huge number of storage batteries need to be installed in the hull. Therefore, a hull weight increases, so that there is a possibility that a propulsion performance or a stability may be reduced for securing of a dead weight, for maintenance of an appropriate posture of the hull, and due to a constraint of a ship principal item.

Further, since it is necessary to secure a place for storing a huge number of storage batteries in the hull, a space for loading a cargo such as a vehicle loading compartment is reduced, and there is a possibility that a cargo capacity may be reduced.

In addition, in a large-capacity storage battery guideline of the ship classification society, there are a requirement that the storage battery cannot be installed in an accommodation space, and a requirement that a storage battery having a total capacity of 100 kWh or more is provided in a dedicated compartment and a dedicated ventilation system is provided. Therefore, there is a case where it is difficult to secure a storage place for the storage battery in the hull.

The present disclosure has been made to solve the above problems, and an object of the present disclosure is to provide a ship capable of securing a storage place for a storage battery, and suppressing a decrease in propulsion performance or stability or a decrease in cargo capacity.

### Solution to Problem

In order to solve the above problems, the following configuration is adopted.

A ship according to the present disclosure includes a hull, a propeller provided in the hull, an engine room provided on a stern side in the hull and accommodating a propulsion motor that drives the propeller, a vehicle loading compartment provided in the hull on a bow side of the engine room, and a side storage-battery compartment provided along at least one of a port side and a starboard side of the hull on an outer side of the vehicle loading compartment in a ship width direction, and capable of accommodating a storage battery that supplies electric power to at least the propulsion motor.

### Advantageous Effects of Invention

According to the ship of the above aspect, a storage place for a storage battery can be secured, and a decrease in propulsion performance or stability, or a decrease in cargo capacity can be suppressed.

### Brief Description of Drawings

Fig. 1 is a side view schematically showing a disposition of a storage-battery compartment of a ship according to a first embodiment of the present disclosure.
Fig. 2 is a plan view schematically showing the disposition of the storage-battery compartment of the ship according to the first embodiment of the present disclosure.
Fig. 3 is a diagram of a ship in a second embodiment of the present disclosure that corresponds to Fig. 1.
Fig. 4 is a diagram of the ship in the second embodiment of the present disclosure that corresponds to Fig. 2.
Fig. 5 is a diagram of a ship in a third embodiment of the present disclosure that corresponds to Fig. 1.
Fig. 6 is a diagram of the ship in the third embodiment of the present disclosure that corresponds to Fig. 2.
Fig. 7 is a diagram of a ship in a modification example of the first embodiment of the present disclosure that corresponds to Fig. 1.
Fig. 8 is a diagram of a ship in the modification example of the first embodiment of the present disclosure that corresponds to Fig. 2.

### Description of Embodiments

### [First Embodiment]

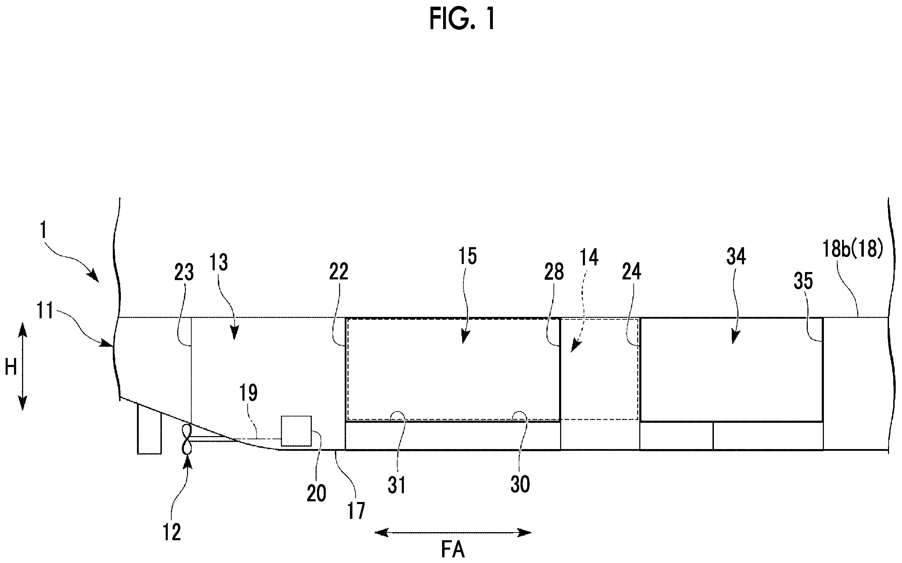

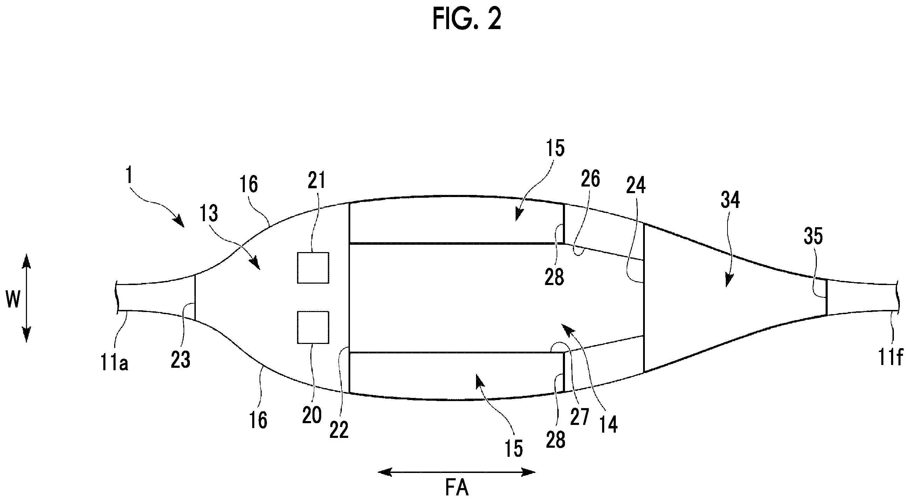

Hereinafter, a ship according to a first embodiment of the present disclosure will be described with reference to the drawings. Fig. 1 is a side view schematically showing a disposition of a storage-battery compartment of a ship according to a first embodiment of the present disclosure. Fig. 2 is a plan view schematically showing the disposition of the storage-battery compartment of the ship according to the first embodiment of the present disclosure.

### (Configuration of Ship)

A ship 1 of the present embodiment is a ship such as a ferry, a RORO ship, or a car carrier having a boarding deck on which a vehicle can be driven and boarded.

As shown in Figs. 1 and 2, the ship 1 in the present embodiment includes at least a hull 11, a propeller 12, an engine room 13, a vehicle loading compartment 14, and a side storage-battery compartment 15.

The hull 11 includes at least a pair of left and right broadside plates 16, a bottom plate 17 that connects the broadside plates 16 to each other below, and a deck 18 that divides an inside of the hull 11 into a plurality of layers in an up-down direction. The hull 11 of the present embodiment has a shore ramp (not shown) on a stern 11a or a broadside, the shore ramp forming a traveling path between a quay wall and a vehicle boarding deck 18b. Among a plurality of the decks 18, the deck 18 continuous with the traveling path of the shore ramp (not shown) is the vehicle boarding deck 18b.

The propeller 12 is provided in the hull 11. The propeller 12 is attached to an end portion on a stern 11a side of a propeller shaft 19 and is rotatable around an axis extending in a bow-stern direction FA. The propeller shaft 19 of the present embodiment is driven by power of a main engine 20 and power of a propulsion motor 21.

The engine room 13 accommodates at least the propulsion motor 21 that drives the propeller 12. The engine room 13 is a watertight compartment and is provided on a side closer to the stern 11a than a center of the hull 11 in the bow-stern direction FA. The engine room 13 of the present embodiment also accommodates the main engine 20 that drives the propeller 12 together with the propulsion motor 21. The main engine 20 converts thermal energy into rotational energy by burning a fuel, and rotates the propeller shaft 19. Examples of the main engine 20 include an engine such as a diesel engine or a gas turbine. In the present embodiment, a so-called hybrid propulsion system is configured in which the propulsion motor 21 assists in driving the propeller 12 by means of the main engine 20.

A bow 11f side and a stern 11a side of the engine room 13 of the present embodiment are partitioned by two transverse bulkheads 22 and 23 extending in a ship width direction W. The two transverse bulkheads 22 and 23 divide a space below the vehicle boarding deck 18b in an up-down direction H (in other words, a bottom side) in the bow-stern direction FA. The engine room 13 of the present embodiment is partitioned by the two transverse bulkheads 22 and 23, the broadside plates 16, the vehicle boarding deck 18b, and the bottom plate 17.

The propulsion motor 21 drives the propeller 12, similarly to the main engine 20. In the present embodiment, the propulsion motor 21 is configured to assist the power of the main engine 20. That is, the ship 1 of the present embodiment adopts a so-called two-engine one-shaft one-rudder system in which one propeller shaft 19 is driven by the main engine 20 and the propulsion motor 21. The ship 1 is not limited to the two-engine one-shaft one-rudder system. In addition, the configuration is not limited to the configuration in which the propulsion motor 21 assists the main engine 20 to drive the propeller 12. For example, a configuration may be adopted in which the propeller 12 can be driven by only the propulsion motor 21 when the main engine 20 breaks down. In addition, the engine room 13 may accommodate a plurality of the main engines 20 and a plurality of the propulsion motors 21, respectively.

The vehicle loading compartment 14 is a compartment in which a vehicle such as a passenger car or a truck can be loaded as a cargo, and is provided in the hull 11 on the bow 11f side of the engine room 13. The vehicle loading compartment 14 of the present embodiment is provided in a lower layer than the vehicle boarding deck 18b. A vehicle that has been boarded on the vehicle boarding deck 18b can be moved to the vehicle loading compartment 14 by being driven along a ramp way (not shown).

A bow 11f side and a stern 11a side of the vehicle loading compartment 14 are partitioned by transverse bulkheads 22 and 24 extending in the ship width direction W. Further, a port side and a starboard side of the vehicle loading compartment 14 are partitioned by longitudinal bulkheads 26 and 27 extending in the bow-stern direction FA. The longitudinal bulkhead 26 on the port side is formed along the broadside plate 16 on the port side, and the longitudinal bulkhead 27 on the starboard side is formed along the broadside plate 16 on the starboard side. Here, when a total width of the hull 11 is defined as "B", the longitudinal bulkheads 26 and 27 that partition the vehicle loading compartments 14 in the ship width direction W may be disposed inside a range of B/10 from the broadside plate 16 in the ship width direction W.

The transverse bulkhead 22 on the stern 11a side, which is one of the transverse bulkheads 22 and 24 partitioning the vehicle loading compartment 14 of the present embodiment, is the same transverse bulkhead as the transverse bulkhead 22 partitioning the bow 11f side of the engine room 13. In other words, the vehicle loading compartment 14 of the present embodiment is adjacent to the engine room 13. However, the vehicle loading compartment 14 is not limited to a case where the vehicle loading compartment 14 is adjacent to the engine room 13, and for example, a fuel tank or the like for the main engine 20 may be provided between the engine room 13 and the vehicle loading compartment 14. In addition, in the ship 1 of the present embodiment, a case has been described in which the ship 1 has a double bottom, a double-bottomed hull inner wall 30 serves as a so-called vehicle deck 31 on which a vehicle can be loaded, and the vehicle loading compartment 14 is formed by surrounding a part of the hull inner wall 30 with the longitudinal bulkheads 26 and 27 or the transverse bulkheads 22 and 24. However, the present disclosure is not limited to this configuration, and for example, another vehicle deck may be provided between the hull inner wall 30 and the vehicle boarding deck 18b in the up-down direction H, and the vehicle loading compartment 14 may be formed by surrounding the other vehicle deck with the longitudinal bulkheads 26 and 27 or the transverse bulkheads 22 and 24.

The side storage-battery compartments 15 are provided along the broadside plate 16 of the hull 11, that is, a port and a starboard, on both outer sides of the vehicle loading compartment 14 in the ship width direction W. The side storage-battery compartments 15 are configured to accommodate a storage battery (not shown) that supplies electric power to at least the propulsion motor 21. The side storage-battery compartments 15 are formed between the left and right longitudinal bulkheads 26 and 27, which partition the vehicle loading compartment 14 described above, and the left and right broadside plates 16, respectively. The side storage-battery compartment 15 of the present embodiment is a watertight compartment.

The side storage-battery compartment 15 on the port of the present embodiment is partitioned by the transverse bulkhead 22 that partitions the bow 11f side of the engine room 13, the longitudinal bulkhead 26, the broadside plate 16 on the port, a bow-side bulkhead 28 that extends from the longitudinal bulkhead 26 toward the broadside plate 16 on the port, the vehicle boarding deck 18b, and the double-bottomed hull inner wall 30. Similarly, the side storage-battery compartment 15 on the starboard is partitioned by the transverse bulkhead 22, the longitudinal bulkhead 27, the broadside plate 16 on the starboard, a bow-side bulkhead 28 that extends from the longitudinal bulkhead 26 toward the broadside plate 16 on the starboard, the vehicle boarding deck 18b, and the double-bottomed hull inner wall 30. That is, both of the left and right side storage-battery compartments 15 are provided above the double-bottomed hull inner wall 30.

Although a case has been described in which the longitudinal bulkheads 26 and 27 are formed to extend from the double-bottomed hull inner wall 30 to the vehicle boarding deck 18b, the longitudinal bulkheads 26 and 27 may be formed not to extend to the vehicle boarding deck 18b. In that case, a deck (not shown) separate from the vehicle boarding deck 18b may be provided to partition an upper side of the side storage-battery compartment 15.

The side storage-battery compartment 15 in the present embodiment has a girder member (not shown) for reinforcing a floor (double-bottomed hull inner wall 30 or deck 18) in order to dispose the storage battery, which is a heavy object. In addition, a ventilation device (not shown) for a storage-battery compartment, which has higher ventilation performance than a ventilation pipe provided in a general void space, is provided in the side storage-battery compartment 15 in order to dispose the storage battery. Further, the side storage-battery compartment 15 is subjected to heat-blocking processing (not shown) in order to prevent a fire caused by the storage battery.

The storage battery of the present embodiment is a large-capacity lithium ion storage battery. The storage battery is accommodated in the side storage-battery compartment 15 in a state where a plurality of the storage batteries are fixed to, for example, a dedicated frame.

A bow-side storage-battery compartment 34 is provided on a bow 11f side which is opposite to the engine room 13 with the vehicle loading compartment 14 interposed therebetween. The bow-side storage-battery compartment 34 is provided between the collision bulkhead 35 provided on a bow 11f side of the hull 11 and the engine room 13. Similarly to the side storage-battery compartment 15, the bow-side storage-battery compartment 34 also accommodates a storage battery capable of supplying electric power to at least the propulsion motor 21. The storage battery accommodated in the bow-side storage-battery compartment 34 is also a large-capacity lithium ion storage battery. A plurality of the storage batteries are fixed to a dedicated frame or the like and accommodated in the bow-side storage-battery compartment 34. Similarly to the side storage-battery compartment 15, the bow-side storage-battery compartment 34 is also provided with a reinforcing girder member and a ventilation device for a storage-battery compartment having high ventilation performance, and heat-blocking processing is subjected to prevent a fire caused by the storage battery.

The bow-side storage-battery compartment 34 of the present embodiment is partitioned by the transverse bulkhead 24 on the bow 11f side that partitions the vehicle loading compartment 14, the left and right broadside plates 16, the vehicle boarding deck 18b, and the double-bottomed hull inner wall 30. That is, the bow-side storage-battery compartment 34 is also provided above the double-bottomed hull inner wall 30, similarly to the side storage-battery compartment 15. Further, the transverse bulkhead 24 partitioning the stern 11a side of the bow-side storage-battery compartment 34 of the present embodiment is the same transverse bulkhead as the transverse bulkhead 24 partitioning the vehicle loading compartment 14. In other words, the bow-side storage-battery compartment 34 of the present embodiment is adjacent to the vehicle loading compartment 14. However, the bow-side storage-battery compartment 34 is not limited to a case where the bow-side storage-battery compartment 34 is adjacent to the vehicle loading compartment 14, and for example, a tank, a void space, or the like may be provided between the bow-side storage-battery compartment 34 and the vehicle loading compartment 14.

The side storage-battery compartment 15 of the present embodiment is separated from the bow-side storage-battery compartment 34 in the bow-stern direction FA. A void space, a ballast tank, or the like is formed between the side storage-battery compartment 15 and the bow-side storage-battery compartment 34 in the bow-stern direction FA. In the present embodiment, a case where the side storage-battery compartment 15 and the bow-side storage-battery compartment 34 are provided to be separated from each other in the bow-stern direction FA has been described. However, for example, the above-described side storage-battery compartment 15 may be extended to the bow 11f side, and the side storage-battery compartment 15 and the bow-side storage-battery compartment 34 may be adjacent to each other.

### (Effects of Action)

According to the ship 1 of the first embodiment, the side storage-battery compartments 15 are provided, the side storage-battery compartments 15 being provided along the left and right broadside plates 16 of the hull 11 on both outer sides of the vehicle loading compartment 14 in the ship width direction W that is provided in the hull 11 on the bow 11f side of the engine room 13, and capable of accommodating the storage battery that supplies electric power to at least the propulsion motors 21.

Accordingly, a storage place for the storage battery can be secured outside the vehicle loading compartment 14. Further, since the storage battery, which is a heavy object, can be disposed on both the outer sides of the vehicle loading compartment 14 in the ship width direction W, for example, it is possible to perform heel adjustment of the hull 11 by using the storage battery instead of a solid ballast and adjusting the number of storage batteries disposed on the left and right sides. Therefore, it is possible to suppress an increase in a weight of the hull 11 and to maintain an appropriate posture of the hull 11 while securing a dead weight, and thus it is possible to suppress a decrease in propulsion performance or stability.

According to the ship 1 of the first embodiment, further, the bow-side storage-battery compartment 34 that accommodates the storage battery capable of supplying electric power to at least the propulsion motor 21 is provided between the collision bulkhead 35 of the hull 11 provided on the bow 11f side, which is a side opposite to the engine room 13 with the vehicle loading compartment 14 interposed therebetween, and the engine room 13.

Accordingly, the storage battery, which is a heavy object, can be installed on the bow 11f side with respect to the transverse bulkhead 24 partitioning the bow 11f side of the vehicle loading compartment 14. That is, the storage place for the storage battery can be secured outside the vehicle loading compartment 14. Therefore, a trim of the hull 11 can be adjusted by adjusting the number of the storage batteries.

Therefore, a solid ballast on the bow 11f side of the vehicle loading compartment 14 can be reduced, and thus it is possible to suppress a steel material cost for the solid ballast. Furthermore, it is possible to suppress an increase in the weight of the hull 11 and suppress a decrease in the propulsion performance or restorability.

According to the ship 1 of the first embodiment, the side storage-battery compartment 15 is provided between the longitudinal bulkheads 26 and 27, which partition the outer side of the vehicle loading compartment 14 in the ship width direction W, and the broadside plate 16 of the hull 11.

Accordingly, since an empty space between the longitudinal bulkheads 26 and 27 and the broadside plate 16 can be effectively used, it is possible to further suppress a decrease in a vehicle loading capacity of the vehicle loading compartment 14.

According to the ship 1 of the first embodiment, further, the side storage-battery compartment 15 is provided above the hull inner wall 30 forming a double bottom of the hull 11.

Accordingly, in a case where the storage battery's life has ended, the storage battery can be easily replaced as compared with a case where the storage battery is accommodated below the double-bottomed hull inner wall 30, and thus maintainability can be improved.

According to the ship 1 of the first embodiment, further, the main engine 20 is provided in the engine room 13. Even in a case where the main engine 20, which is a heavy object, is provided in the engine room 13 as described above, it is possible to adjust the trim and a heel by means of the storage battery accommodated in the side storage-battery compartment 15 disposed on a bow 11f side with respect to the engine room 13. In addition, since the main engine 20 is provided, even in a case where the adjustment of the trim is insufficient with only the storage battery accommodated in the side storage-battery compartment 15, further trim adjustment can be performed by the storage battery accommodated in the bow-side storage-battery compartment 34. Therefore, appropriate trim adjustment can be performed.

### [Second Embodiment]

Next, a second embodiment of the present disclosure will be described based on the drawings. The second embodiment is different from the above-described first embodiment only in that a flooding prevention compartment is provided in the ship 1. Therefore, the same parts as those in the first embodiment will be given the same reference numerals, and the duplicate description will be omitted.

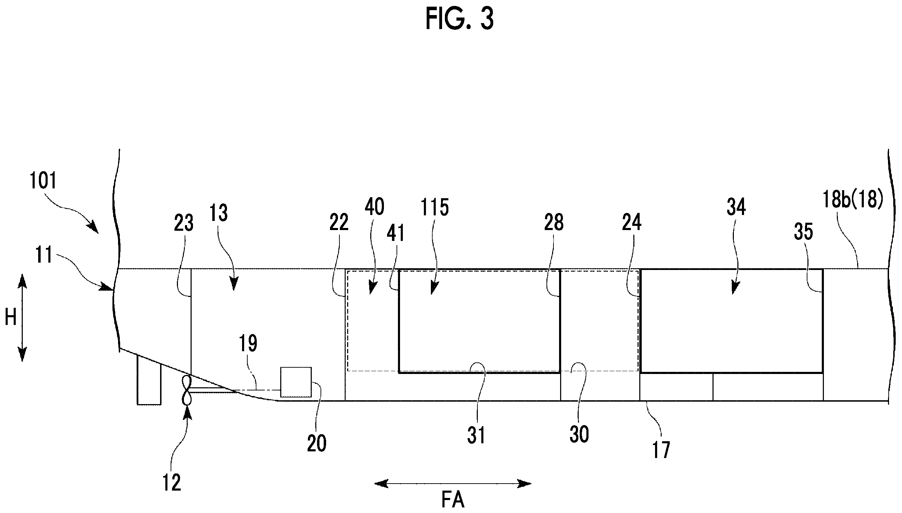

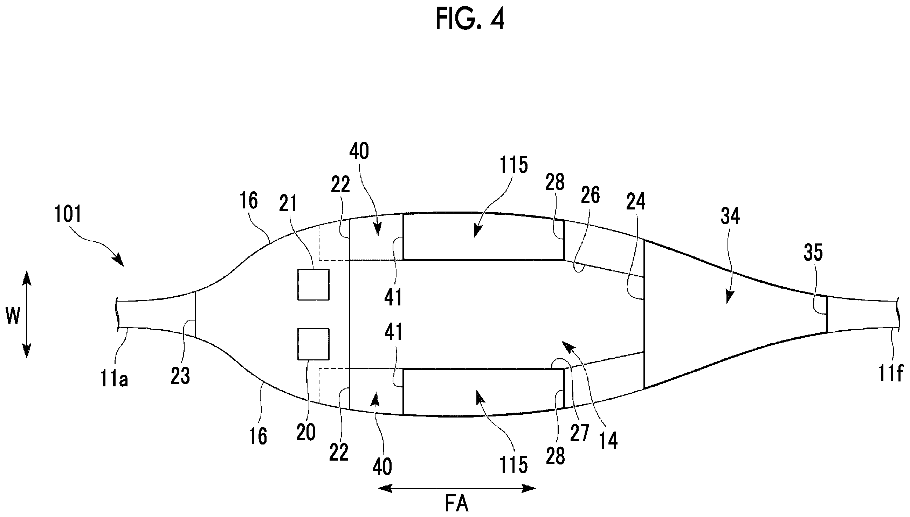

Fig. 3 is a diagram of a ship in a second embodiment of the present disclosure that corresponds to Fig. 1. Fig. 4 is a diagram of the ship in the second embodiment of the present disclosure that corresponds to Fig. 2.

As shown in Figs. 3 and 4, a ship 101 of the second embodiment includes, similarly to the ship 1 of the first embodiment, at least the hull 11, the propeller 12, the engine room 13, the vehicle loading compartment 14, and a side storage-battery compartment 115.

In the hull 11 of the ship 101 of the second embodiment, a flooding prevention compartment 40, which is a watertight compartment, is provided between the engine room 13 and the side storage-battery compartment 115 in the bow-stern direction FA. The flooding prevention compartments 40 are respectively provided one by one on the port and the starboard in the ship width direction W. The flooding prevention compartment 40 is partitioned by at least the broadside plate 16 and the transverse bulkhead 22. That is, the side storage-battery compartment 15 and the engine room 13 are separated from each other in the bow-stern direction FA by providing the flooding prevention compartment 40.

A watertight bulkhead 41 that divides the flooding prevention compartment 40 and the side storage-battery compartment 115 of the present embodiment from each other in the bow-stern direction FA is formed between the flooding prevention compartment 40 and the side storage-battery compartment 115. That is, the flooding prevention compartment 40 of the present embodiment is partitioned by the broadside plate 16, the double-bottomed hull inner wall 30, the transverse bulkhead 22, the longitudinal bulkhead 26 or the longitudinal bulkhead 27, and the watertight bulkhead 41. Although a case where the flooding prevention compartment 40 is provided on a bow 11f side with respect to the transverse bulkhead 22 has been described as an example, as shown by a broken line in Fig. 4, the flooding prevention compartment 40 may be provided, for example, on a stern 11a side with respect to the transverse bulkhead 22, or may be provided on both a bow 11f side and a stern 11a side of the transverse bulkhead 22 in the bow-stern direction FA.

According to the second embodiment, the flooding prevention compartment 40 is provided. Therefore, for example, even in a case where damage occurs in the broadside plate 16 in the vicinity of the transverse bulkhead 22 that partitions the bow 11f side of the engine room 13, it is possible to prevent the flooding prevention compartment 40 from being flooded and both the engine room 13 and the side storage-battery compartment 115 from being flooded. A bulkhead may be provided in the flooding prevention compartment 40 to divide a space in the flooding prevention compartment 40 in the up-down direction H or the bow-stern direction FA.

### [Third Embodiment]

Next, a third embodiment of the present disclosure will be described based on the drawings. The third embodiment is different from the above-described first embodiment only in configurations of the ship 1, the side storage-battery compartment 15, and the bow-side storage-battery compartment 34. Therefore, the same parts as those in the first embodiment will be given the same reference numerals, and the duplicate description will be omitted.

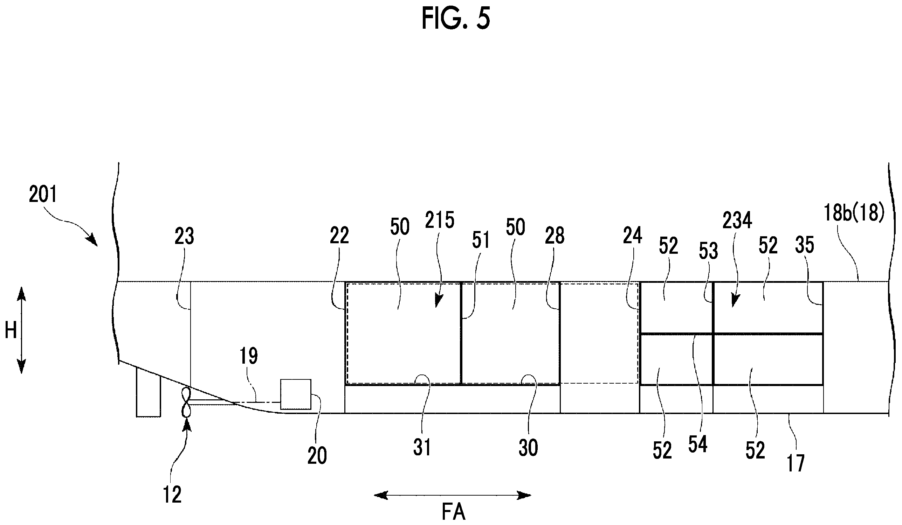

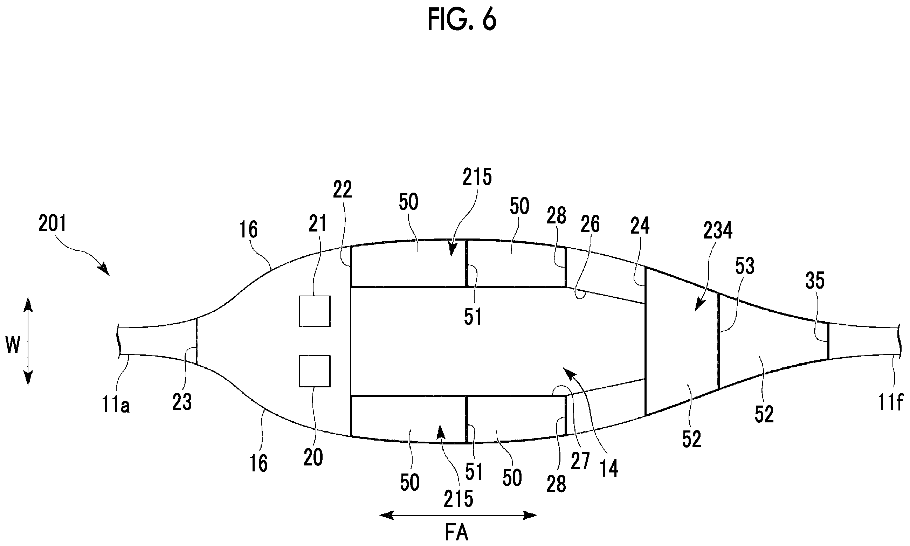

Fig. 5 is a diagram of a ship in a third embodiment of the present disclosure that corresponds to Fig. 1. Fig. 6 is a diagram of the ship in the third embodiment of the present disclosure that corresponds to Fig. 2.

As shown in Figs. 5 and 6, a ship 201 of the third embodiment includes, similarly to the first embodiment, the hull 11, the propeller 12, the engine room 13, the vehicle loading compartment 14, and a side storage-battery compartment 215.

The side storage-battery compartment 215 of the ship 201 of the third embodiment is provided on the port side and the starboard side, similarly to the side storage-battery compartment 15 of the first embodiment. The side storage-battery compartment 215 of the third embodiment includes a plurality of side battery sub-compartments 50 that accommodate the storage batteries. Each of the plurality of side battery sub-compartments 50 is a watertight compartment. In the present embodiment, a first internal bulkhead 51 that extends in the ship width direction W and that divides an inside of the side storage-battery compartment 215 in the bow-stern direction FA is provided, and thus the plurality of side battery sub-compartments 50 are formed side by side in the bow-stern direction FA. Each of the side battery sub-compartments 50 accommodates a storage battery capable of supplying electric power to at least the propulsion motor 21.

Further, a bow-side storage-battery compartment 234 of the third embodiment also has a plurality of bow-side battery sub-compartments 52 that accommodate the storage batteries, similarly to the above-described side storage-battery compartment 215. Each of the plurality of bow-side battery sub-compartments 52 is also a watertight compartment. In the present embodiment, a second internal bulkhead 53 that divides an inside of the bow-side storage-battery compartment 234 in the bow-stern direction FA and a third internal bulkhead 54 that divides the inside of the bow-side storage-battery compartment 234 in the up-down direction H are provided, and the plurality of bow-side battery sub-compartments 52 are formed side by side in the bow-stern direction FA and the up-down direction H. Each of the bow-side battery sub-compartments 52 accommodates a storage battery capable of supplying electric power to at least the propulsion motor 21.

In the third embodiment, a case has been described in which the bow-side storage-battery compartment 234 has the plurality of bow-side battery sub-compartments 52 disposed side by side in the bow-stern direction FA and the up-down direction H. However, the third internal bulkhead 54 may be omitted and the plurality of bow-side battery sub-compartments 52 may be formed side by side only in the bow-stern direction FA, similarly to the side storage-battery compartment 215. In addition, a case where the side battery sub-compartments 50 are formed side by side in the bow-stern direction FA has been described. However, the present disclosure is not limited to this configuration, and for example, the side battery sub-compartments 50 may be formed side by side in the bow-stern direction FA and the up-down direction **H.**

### (Effects of Action)

According to the ship 201 of the third embodiment, the first internal bulkhead 51 that divides the inside of the side storage-battery compartment 215 into a plurality of watertight compartments is provided.

Therefore, even if the broadside plate 16 is damaged and water enters the side storage-battery compartment 215, it is possible to prevent the storage battery accommodated at a position away from the damaged location from being flooded. Therefore, it is possible to maintain an electric power supply function by means of some of the storage batteries accommodated in the side storage-battery compartment 15 that are not flooded, and redundancy can be ensured.

According to the ship 201 of the third embodiment, the second internal bulkhead 53 that divides the inside of the bow-side storage-battery compartment 234 into a plurality of watertight compartments is provided.

Therefore, even if the broadside plate 16 is damaged and water enters the bow-side storage-battery compartment 234, it is possible to prevent the storage battery accommodated at the position away from the damaged location from being flooded. Therefore, it is possible to maintain an electric power supply by means of some of the storage batteries accommodated in the bow-side storage-battery compartment 234 that are not flooded, and redundancy can be ensured.

Further, since a plurality of sub-compartments can be formed by the first internal bulkhead 51 and the second internal bulkhead 53, it is possible to narrow a range of flooding as compared with a case where the sub-compartments are not formed.

### <Other Embodiments>

For example, in each of the above embodiments, a case where the side storage-battery compartment 15, 115, or 215 on the port and the side storage-battery compartment 15, 115, or 215 on the starboard are formed to be symmetrical with each other has been described. However, the present disclosure is not limited to a case where the side storage-battery compartment 15, 115, or 215 on the port and the side storage-battery compartment 15, 115, or 215 on the starboard are formed to be symmetrical with each other. In addition, the number of the storage batteries accommodated in the side storage-battery compartment 15, 115, or 215 on the port and the number of the storage batteries accommodated in the side storage-battery compartment 15, 115, or 215 on the starboard are not limited to being the same. In a case where the storage battery is used instead of a ballast to adjust, for example, a left and right balance (in other words, heel) of the hull 11, the number of the storage batteries accommodated in the left and right side storage-battery compartments 15, 115, or 215 may be different. In addition, the side storage-battery compartments 15, 115, or 215 are not limited to being provided on both the port and the starboard. The side storage-battery compartment 15, 115, or 215 may be provided only on either the port or the starboard.

Further, in each of the embodiments, a case where the bow-side storage-battery compartment 34 or 234 is provided has been described. However, the bow-side storage-battery compartment 34 or 234 may be omitted.

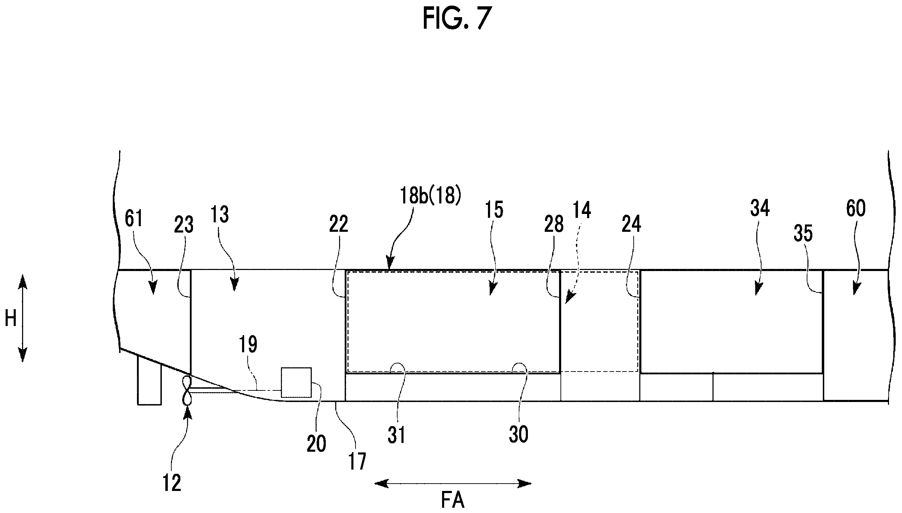

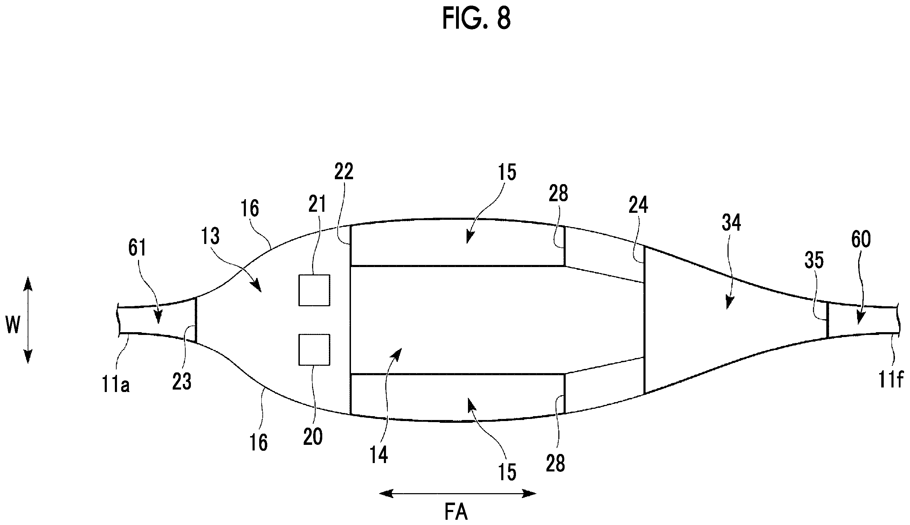

Fig. 7 is a diagram of a ship in a modification example of the first embodiment of the present disclosure that corresponds to Fig. 1. Fig. 8 is a diagram of a ship in the modification example of the first embodiment of the present disclosure that corresponds to Fig. 2.

In each of the above-described embodiments, a case where the bow-side storage-battery compartment 34 is provided between the collision bulkhead 35 and the vehicle loading compartment 14 in the bow-stern direction FA has been described. However, for example, in a case where further trim adjustment to the bow 11f side is required or in a case where an increase in the number of storage batteries is required, a storage-battery compartment in front of collision bulkhead 60 that accommodates the storage battery even on a bow 11f side with respect to the collision bulkhead 35 may be provided as shown in Figs. 7 and 8. In addition, a storage-battery compartment behind engine room 61 that accommodates the storage battery on a stern 11a side with respect to the engine room 13 may be provided in a case where further trim adjustment to the stern 11a side is required, in a case where an increase in the number of storage batteries is required, or the like. Only one or both of the storage-battery compartment in front of collision bulkhead 60 and the storage-battery compartment behind engine room 61 may be provided as necessary. Similarly to the above-described bow-side storage-battery compartment 34, the storage-battery compartment in front of collision bulkhead 60 and the storage-battery compartment behind engine room 61 are provided with a reinforcing girder member and a ventilation device for the storage-battery compartment having high ventilation performance, and heat-blocking processing is subjected to prevent a fire caused by the storage battery. A modification example of the first embodiment has been described with reference to Figs. 7 and 8. However, at least one of the storage-battery compartment in front of collision bulkhead 60 and storage-battery compartment behind engine room 61 may be provided in the ship 101 of the second embodiment and the ship 201 of the third embodiment.

A case where the main engine 20 that burns a fuel to drive the propeller 12 is provided in the engine room 13 of each of the above-described embodiments has been described. However, the ship may not include the main engine 20 in the engine room 13.

Further, in each of the embodiments, a case where a so-called hybrid propulsion system in which the propulsion motor 21 assists the main engine 20 is configured has been described. However, the present disclosure is not limited to a case where the hybrid propulsion system is configured, and for example, the propulsion motor 21 may drive a sub-propeller such as an azimuth propeller or a thruster, and the main engine 20 may drive a main propeller.

### <Additional Notes>

The ship 1, 101, or 201 described in the embodiment is understood as follows, for example.
(1) According to a first aspect, a ship 1, 101, 201 includes a hull 11, a propeller 12 provided in the hull 11, an engine room 13 provided on a stern 11a side in the hull 11 and accommodating a propulsion motor 21 that drives the propeller 12, a vehicle loading compartment 14 provided in the hull 11 on a bow 11f side of the engine room 13, and a side storage-battery compartment 15, 115, 215 provided along at least one of a port side and a starboard side of the hull 11 on both outer sides of the vehicle loading compartment 14 in a ship width direction W, and capable of accommodating a storage battery that supplies electric power to at least the propulsion motor 21.

Examples of the ship 1, 101, 201 include a ferry, a RORO ship, and a car carrier.

Accordingly, a storage place for the storage battery can be secured outside the vehicle loading compartment 14. Further, since the storage battery, which is a heavy object, can be disposed on both the outer sides of the vehicle loading compartment 14 in the ship width direction W, for example, it is possible to perform heel adjustment of the hull 11 by using the storage battery instead of a solid ballast and adjusting the number of storage batteries disposed on the left and right sides.

Therefore, it is possible to suppress an increase in a hull weight and to maintain an appropriate posture of the hull 11 while securing a dead weight, and thus it is possible to suppress a decrease in propulsion performance or stability.

(2) A ship 201 according to a second aspect is the ship 201 of (1), and includes a first internal bulkhead 51 that divides an inside of the side storage-battery compartment 215 into a plurality of watertight compartments.

Therefore, even if the broadside plate 16 is damaged and water enters the side storage-battery compartment 215, it is possible to prevent the storage battery accommodated at a position away from the damaged location from being flooded. Therefore, it is possible to maintain an electric power supply function by means of some of the storage batteries accommodated in the side storage-battery compartment 215 that are not flooded, and redundancy can be ensured.

(3) A ship 1, 101, 201 according to a third aspect is the ship 1, 101, 201 of (1) or (2), and further includes a bow-side storage-battery compartment 34, 234 that is provided between a collision bulkhead 35 of the hull 11 provided on a bow 11f side, which is a side opposite to the engine room 13 with the vehicle loading compartment 14 interposed therebetween, and the engine room 13 and that accommodates a storage battery capable of supplying electric power to at least the propulsion motor 21.

Accordingly, the storage battery, which is a heavy object, can be installed on the bow 11f side with respect to the collision bulkhead 35, and thus the trim of the hull 11 can be adjusted by adjusting the number of the storage batteries.

Therefore, a solid ballast on the bow 11f side of the vehicle loading compartment 14 can be reduced, and thus it is possible to suppress a steel material cost for the solid ballast. Furthermore, it is possible to suppress an increase in the hull weight and suppress a decrease in the propulsion performance or restorability.

(4) A ship 201 according to a fourth aspect is the ship 201 of (3), and includes a second internal bulkhead 53 that divides an inside of the bow-side storage-battery compartment 234 into a plurality of watertight compartments.

Therefore, even if the broadside plate 16 is damaged and water enters the bow-side storage-battery compartment 234, it is possible to prevent the storage battery accommodated at a position away from the damaged location from being flooded. Therefore, it is possible to maintain an electric power supply by means of some of the storage batteries accommodated in the bow-side storage-battery compartment 234 that are not flooded, and redundancy can be ensured.

(5) A ship 1, 101, 201 according to a fifth aspect is the ship 1, 101, 201 of any one of (1) to (4), in which the side storage-battery compartment 15, 115, 215 is provided between a longitudinal bulkhead 26, 27, which partitions the outer side of the vehicle loading compartment 14 in the ship width direction W, and a broadside plate 16 of the hull 11.

Accordingly, since an empty space between the longitudinal bulkheads 26 and 27 and the broadside plate 16 can be effectively used, it is possible to further suppress a decrease in a vehicle loading capacity of the vehicle loading compartment 14.

(6) A ship 1, 101, 201 according to a sixth aspect is the ship 1, 101, 201 of any one of (1) to (5), in which the side storage-battery compartment 15, 115, 215 is provided above a hull inner wall 30 forming a double bottom of the hull 11.

Accordingly, in a case where the storage battery's life has ended, the storage battery can be easily replaced as compared with a case where the storage battery is accommodated below the double-bottomed hull inner wall 30, and thus maintainability can be improved.

(7) A ship 101 according to a seventh aspect is the ship 101 of any one of (1) to (6), and includes a watertight compartment between the engine room 13 and the side storage-battery compartment 115 in a bow-stern direction FA.

Therefore, for example, even in a case where damage occurs in the broadside plate 16 in the vicinity of the transverse bulkhead 22 that partitions the bow 11f side of the engine room 13, it is possible to prevent the watertight compartment from being flooded and both the engine room 13 and the side storage-battery compartment 115 from being flooded.

(8) A ship 1, 101, 201 according to an eighth aspect is the ship 1, 101, 201 of (3), and includes a storage-battery compartment in front of collision bulkhead 60 that accommodates the storage battery on a bow 11f side with respect to the collision bulkhead 35.

Accordingly, the storage battery can be accommodated on the bow 11f side with respect to the collision bulkhead 35, and thus the number of storage batteries installed in the hull 11 can be increased and further trim adjustment to the bow 11f side can be performed.

(9) A ship 1, 101, 201 according to a ninth aspect is the ship 1, 101, 201 of any one of (1) to (8), and includes a storage-battery compartment behind engine room 61 that accommodates the storage battery on a stern 11a side with respect to the engine room 13.

Accordingly, the storage battery can be accommodated on the stern 11a side with respect to the engine room 13, and thus the number of storage batteries installed in the hull 11 can be increased and further trim adjustment to the stern 11a side can be performed.

(10) A ship 1, 101, 201 according to a tenth aspect is the ship 1, 101, 201 of any one of (1) to (9), further includes a main engine 20 that is provided in the engine room 13 and burns a fuel to drive the propeller 12.

Accordingly, even in a case where the main engine 20, which is a heavy object, is provided in the engine room 13 as described above, it is possible to adjust the trim and a heel by means of the storage battery accommodated in the side storage-battery compartment 15, 115, 215 disposed on a bow 11f side with respect to the engine room 13. Therefore, appropriate trim adjustment can be performed.

### Industrial Applicability

According to the ship of the present disclosure, a storage place for a storage battery can be secured, and a decrease in propulsion performance or stability, or a decrease in cargo capacity can be suppressed.

### Reference Signs List

1, 101: ship
11: hull
11a: stern
11f: bow
12: propeller
13: engine room
14: vehicle loading compartment
15, 115, 215: side storage-battery compartment
16: broadside plate
17: bottom plate
18: deck
18b: vehicle boarding deck
19: propeller shaft
20: main engine
21: propulsion motor
22, 23, 24: transverse bulkhead
26, 27: longitudinal bulkhead
28: bow-side bulkhead
30: hull inner wall
31: vehicle deck
34, 234: bow-side storage-battery compartment
35: collision bulkhead
40: flooding prevention compartment
41: watertight bulkhead
50: side battery sub-compartment
51: first internal bulkhead
52: bow-side battery sub-compartment
53: second internal bulkhead
54: third internal bulkhead
60: storage-battery compartment in front of collision bulkhead

## Claims

1. A ship (1, 101) comprising:
a hull (11);
a propeller (12) provided in the hull (11);
an engine room (13) provided on a stern side in the hull (11) and accommodating a propulsion motor (21) that drives the propeller (12);
a vehicle loading compartment (14) provided in the hull (11) on a bow side of the engine room (13), **characterized by** comprising a side storage-battery compartment (15, 115, 215) provided along at least one of a port side and a starboard side of the hull (11) on an outer side of the vehicle loading compartment (14) in a ship width direction, and capable of accommodating a storage battery that supplies electric power to at least the propulsion motor (21); and
a bow-side storage-battery compartment (34, 234) that is provided between a collision bulkhead (35) of the hull (11) provided on a bow side, which is a side opposite to the engine room (13) with the vehicle loading compartment (14) interposed therebetween, and the engine room and that accommodates a storage battery capable of supplying electric power to at least the propulsion motor (21).

2. The ship (1, 101) according to claim 1, further comprising:
a first internal bulkhead (51) that divides an inside of the side storage-battery compartment (15, 115, 215) into a plurality of watertight compartments.

3. The ship (1, 101) according to claim 1 or 2, further comprising:
a second internal bulkhead (53) that divides an inside of the bow-side storage-battery compartment (34, 234) into a plurality of watertight compartments.

4. The ship (1, 101) according to claim 1 or 2,
wherein the side storage-battery compartment (15, 115, 215) is provided between a longitudinal bulkhead (26, 27), which partitions the outer side of the vehicle loading compartment (14) in the ship width direction, and a broadside plate of the hull (11).

5. The ship (1, 101) according to claim 1 or 2,
wherein the side storage-battery compartment (15, 115, 215) is provided above a hull inner wall (30) forming a double bottom of the hull (11).

6. The ship (1, 101) according to claim 1 or 2, further comprising:
a watertight compartment between the engine room (13) and the side storage-battery compartment (15, 115, 215) in a bow-stern direction.

7. The ship (1, 101) according to claim 1 or 2, further comprising:
a storage-battery compartment in front of collision bulkhead (60) that accommodates the storage battery on a bow side with respect to the collision bulkhead (35).

8. The ship (1, 101) according to claim 1 or 2, further comprising:
a storage-battery compartment behind engine room (61) that accommodates the storage battery on a stern side with respect to the engine room (13).

9. The ship (1, 101) according to claim 1 or 2, further comprising:
a main engine (20) that is provided in the engine room (13) and burns a fuel to drive the propeller (12).

## Patentansprüche

1. Schiff (1, 101), umfassend:
einen Rumpf (11);
einen Propeller (12), der in dem Rumpf (11) vorgesehen ist;
einen Maschinenraum (13), der an einer Heckseite in dem Rumpf (11) vorgesehen ist und einen Antriebsmotor (21) aufnimmt, der den Propeller (12) antreibt;
ein Fahrzeugladeabteil (14), das in dem Rumpf (11) auf einer Bugseite des Maschinenraums (13) vorgesehen ist, **dadurch gekennzeichnet, dass** es ein seitliches Speicherbatterieabteil (15, 115, 215) umfasst, das entlang mindestens einer von einer Backbordseite oder einer Steuerbordseite des Rumpfs (11) auf einer Außenseite des Fahrzeugladeabteils (14) in Schiffsbreitenrichtung vorgesehen und fähig ist, eine Speicherbatterie aufzunehmen, die zumindest den Antriebsmotor (21) mit elektrischer Energie versorgt, und
ein bugseitiges Speicherbatterieabteil (34, 234), das zwischen einem Kollisionsschott (35) des Rumpfs (11), das auf einer Bugseite vorgesehen ist, die eine dem Maschinenraum (13) gegenüberliegende Seite ist, wobei das Fahrzeugladeabteil (14) dazwischen eingesetzt ist, und dem Maschinenraum vorgesehen ist und das eine Speicherbatterie aufnimmt, die fähig ist, zumindest den Antriebsmotor (21) mit elektrischer Energie zu versorgen.

2. Schiff (1, 101) nach Anspruch 1, ferner umfassend:
ein erstes inneres Schott (51), das einen Innenraum des seitlichen Speicherbatterieabteils (15, 115, 215) in eine Vielzahl von wasserdichten Abteilen unterteilt.

3. Schiff (1, 101) nach Anspruch 1 oder 2, ferner umfassend:
ein zweites inneres Schott (53), das einen Innenraum des bugseitigen Speicherbatterieabteils (34, 234) in eine Vielzahl von wasserdichten Abteilen unterteilt.

4. Schiff (1, 101) nach Anspruch 1 oder 2,
wobei das seitliche Speicherbatterieabteil (15, 115, 215) zwischen einem Längsschott (26, 27), das die Außenseite des Fahrzeugladeabteils (14) in der Schiffsbreitenrichtung unterteilt, und einer Bordwandplatte des Rumpfs (11) vorgesehen ist.

5. Schiff (1, 101) nach Anspruch 1 oder 2,
wobei das seitliche Speicherbatterieabteil (15, 115, 215) oberhalb einer Rumpfinnenwand (30) vorgesehen ist, die einen Doppelboden des Rumpfs (11) bildet.

6. Schiff (1, 101) nach Anspruch 1 oder 2, ferner umfassend:
ein wasserdichtes Abteil zwischen dem Maschinenraum (13) und dem seitlichen Speicherbatterieabteil (15, 115, 215) in Bug-Heck-Richtung.

7. Schiff (1, 101) nach Anspruch 1 oder 2, ferner umfassend:
ein Speicherbatterieabteil vor dem Kollisionsschott (60), das die Speicherbatterie auf einer Bugseite in Bezug auf das Kollisionsschott (35) aufnimmt.

8. Schiff (1, 101) nach Anspruch 1 oder 2, ferner umfassend:
ein Speicherbatterieabteil hinter dem Maschinenraum (61), das die Speicherbatterie auf einer Heckseite des Maschinenraums (13) aufnimmt.

9. Schiff (1, 101) nach Anspruch 1 oder 2, ferner umfassend:
eine Hauptmaschine (20), die in dem Maschinenraum (13) vorgesehen ist und einen Kraftstoff verbrennt, um den Propeller (12) anzutreiben.

## Revendications

1. Navire (1, 101) comprenant :
une coque (11) ;
une hélice (12) disposée dans la coque (11) ;
une salle des machines (13) disposée d'un côté poupe dans la coque (11) et logeant un moteur de propulsion (21) qui entraîne l'hélice (12) ;
un compartiment de chargement de véhicules (14) prévu dans la coque (11) d'un côté proue de la salle des machines (13), **caractérisé en ce qu'**il comprend un compartiment latéral de batterie d'accumulateurs (15, 115, 215) prévu le long d'au moins l'un parmi un côté bâbord et un côté tribord de la coque (11), sur un côté extérieur du compartiment de chargement de véhicules (14) dans le sens de la largeur du navire, et capable de loger une batterie d'accumulateurs qui alimente en énergie électrique au moins le moteur de propulsion (21) ; et
un compartiment de batterie d'accumulateurs côté proue (34, 234) qui est prévu entre une cloison anti-collision (35) de la coque (11) située sur un côté proue, qui est un côté opposé à la salle des machines (13) avec le compartiment de chargement de véhicules (14) interposé entre eux, et la salle des machines, et qui loge une batterie d'accumulateurs capable de fournir de l'énergie électrique au moins au moteur de propulsion (21).

2. Navire (1, 101) selon la revendication 1, comprenant en outre :
une première cloison interne (51) qui divise l'intérieur du compartiment latéral de batterie d'accumulateurs (15, 115, 215) en une pluralité de compartiments étanches.

3. Navire (1, 101) selon la revendication 1 ou 2, comprenant en outre :
une deuxième cloison interne (53) qui divise l'intérieur du compartiment de batterie d'accumulateurs côté proue (34, 234) en une pluralité de compartiments étanches.

4. Navire (1, 101) selon la revendication 1 ou 2,
dans lequel le compartiment latéral de batterie d'accumulateurs (15, 115, 215) est prévu entre une cloison longitudinale (26, 27), qui divise le côté extérieur du compartiment de chargement de véhicules (14) dans le sens de la largeur du navire, et une plaque latérale de la coque (11).

5. Navire (1, 101) selon la revendication 1 ou 2,
dans lequel le compartiment latéral de batterie d'accumulateurs (15, 115, 215) est prévu au-dessus d'une paroi intérieure de la coque (30) formant un double fond de la coque (11).

6. Navire (1, 101) selon la revendication 1 ou 2, comprenant en outre :
un compartiment étanche entre la salle des machines (13) et le compartiment latéral de batterie d'accumulateurs (15, 115, 215) dans une direction proue-poupe.

7. Navire (1, 101) selon la revendication 1 ou 2, comprenant en outre :
un compartiment de batterie de stockage situé à l'avant de la cloison de collision (60), qui loge la batterie d'accumulateurs sur un côté proue par rapport à la cloison anti-collision (35).

8. Navire (1, 101) selon la revendication 1 ou 2, comprenant en outre :
un compartiment de batterie d'accumulateurs situé derrière la salle des machines (61), qui loge la batterie d'accumulateurs sur un côté poupe par rapport à la salle des machines (13).

9. Navire (1, 101) selon la revendication 1 ou 2, comprenant en outre :
un moteur principal (20) qui est installé dans la salle des machines (13) et qui brûle un carburant pour entraîner l'hélice (12).
